# EUROPEAN PATENT SPECIFICATION

(11) **EP 2 523 586 B1**
(45) Date of publication and mention of the grant of the patent: **13.08.2014**
(21) Application number: 11700170.1
(22) Date of filing: 12.01.2011
(51) Int. Cl.: A47J 31/44

(54) **ERGONOMIC INGREDIENT HOLDER AND SERVICE UNIT COORDINATION**
ERGONOMISCHER WIRKSTOFFHALTER UND KOORDINATION EINER SERVICEEINHEIT
SUPPORT D'INGRÉDIENT ERGONOMIQUE ET COORDINATION D'UNITÉ DE SERVICE

(30) Priority: 15.01.2010 EP 10150841
(43) Date of publication of application: 21.11.2012
(73) Proprietor: Nestec S.A., 1800 Vevey (CH)
(72) Inventor: SCHNYDER, Frank, 1800 Vevey (CH)
(74) Representative: Schnyder, Frank Simon
(86) International application number: PCT/EP2011/050319
(87) International publication number: WO 2011/086088

(56) References cited:
- WO-A1-2009/074559

## Description

### Field of the Invention

The field of the invention pertains to brewing units and service units for beverage preparation machines, in particular beverage preparation machines for preparing beverages from a pre-portioned ingredient of the beverage supplied within a capsule to the machine. The service unit may include an arrangement for collecting waste material generated during operation of the beverage preparation machine or supply an ingredient, in particular a liquid such as water.

For the purpose of the present description, a "beverage" is meant to include any liquid food, such as tea, coffee, hot or cold chocolate, milk, soup, baby food, etc... A "capsule" is meant to include any pre-portioned beverage ingredient within an enclosing packaging of any material, in particular an airtight packaging, e.g. plastic, aluminium, recyclable and/or biodegradable packagings, and of any shape and structure, including soft pods or rigid cartridges containing the ingredient.

### Background Art

Beverage preparation machines are becoming very popular whether at home or in offices. For instance, there are machines for the preparation of beverages such as coffee, tea, soup or other similar beverages, in which at least one ingredient of the desired beverage, for example ground coffee, is supplied within a capsule into a capsule extraction chamber of the machine.

The ingredient is typically extracted by a liquid, such as water, circulated in the beverage preparation machine from a source of liquid through the capsule extraction chamber. From the extraction chamber, the liquid containing the extracted ingredient is dispensed via a beverage outlet of the machine to a user, e.g. into a user-cup or user-mug appropriately placed underneath the outlet during the beverage preparation process.

The use of capsules, such as plastic and/or aluminium-based capsules, for the preparation of beverages has many advantages. Capsules, in particular aluminium-based capsules, are hermetic or gas tight and thus can protect the beverage ingredient effectively during an extended period of time against the environment such as air, humidity or light, before use of the ingredient. Thus such capsules prevent premature degradation of the ingredient. Furthermore, capsules of a beverage ingredient are easy to handle, hygienic, and their use involves less cleaning of the beverage preparation machine, in particular no significant part of the machine's extraction chamber comes into contact with the beverage ingredient contained in the capsule during the extraction process. Moreover, upon use, any residual waste ingredient is largely confined within the capsule so that generally no loose waste ingredient has to be removed from the beverage preparation machine after use.

Capsules are usually inserted individually into the machine's extraction chamber, manually or automatically from a capsule stack. Hot or cold water is then passed through the capsule for brewing or otherwise extracting the ingredient(s) contained within the capsule and form the desired beverage. The prepared beverage is supplied via an outlet of the machine into a cup, mug or other receptacle to the user.

Upon extraction, the used capsules may either be removed individually from the beverage preparation machine after each preparation cycle. Alternatively, the used capsules may be evacuated to a machine's used-capsule receptacle and collected therein.

The beverage preparation machines are advantageously provided with a service unit for handling waste materials generated during the beverage preparation process. The waste materials include waste ingredients, such as ground coffee after extraction, and/or liquid such as liquid evacuated from the liquid circuit between the liquid source and the beverage outlet or excess beverage dispensed at the beverage outlet, e.g. in the form of drips at the end of a beverage preparation process. For example, the service unit includes a waste liquid collect arrangement with at least one of a: user-recipient support provided with a liquid evacuation arrangement such as a grid; and a waste ingredient holding arrangement. Typically, the user-recipient support and/or the waste ingredient holding arrangement are situated above the waste liquid collect arrangement so that waste liquid may be evacuated by gravity from the user-recipient support and/or the waste ingredient holding arrangement to the waste liquid collect arrangement.

Advantageously, the used-capsule receptacle is located underneath the capsule chamber so that the capsules may fall by gravity into the receptacle upon extraction. In the latter case, the receptacle has to be emptied by the user when full. The receptacle may be a removable receptacle located in the beverage preparation machine typically under the extraction chamber.

Service units of beverage preparation machines are for example disclosed in EP 1 095 605, EP 1 731 065, EP 1 867 260, WO 2009/013778, WO 2009/074559 and WO 2009/135869. Such service units are advantageously combined with a brewing unit arranged to evacuate automatically any used capsules at reopening, for example as disclosed in EP 1 095 605, EP 1 646 305, EP 1 757 212, EP 1 859 713, EP 1 859 714, EP 2 103 236, EP 2 119 385, WO 2009/043630 and WO 2009/130099.

Usually, the beverage preparation machine has a seat for receiving such a service unit. Typically, the seat is located inside the machine's housing and is so configured that the service unit can be slid in an out of the beverage preparation machine.

A problem may arise when the service unit is improperly inserted into the machine or even not inserted at all into the machine when a user wishes to initiate a beverage preparation process. In such a situation, there is a risk of improper collection of waste ingredient or liquid during the beverage preparation process and generation of a mess in the beverage preparation machine. Likewise, a user may by mistake interfere with the proper positioning of the service unit in the machine during a beverage preparation process which may lead to similar consequences.

A solution involves the implementation of sensor and electronically controlled locking systems for detecting the proper insertion of the service unit into the beverage preparation machine and the loading state of the extraction chamber, and for electronically blocking the beverage preparation process when the service unit is not properly inserted into the machine and prevent servicing of the service unit when the extraction chamber is still full. Such electronic sensor and locking systems are relatively expensive. Hence, these systems are usually not provided in beverage preparation machines of the entry or the middle commercial range.

There is still a need to provide an inexpensive simple solution for improving the coordination of the service unit and the extraction process.

### Summary of the Invention

The invention thus relates to a beverage preparation machine that comprises:
- a seat;
- an ingredient holder, in particular a brewing unit, that has a processing configuration for processing an ingredient contained in the holder and a transfer configuration for inserting this ingredient into the holder and/or for evacuating this ingredient from the holder; and
- a service unit having an operative position in the seat for collecting consumed ingredient from the ingredient holder and/or for supplying consumable ingredient to the ingredient holder, the service unit being removable from the seat for emptying the consumed ingredient and/or refilling with consumable ingredient.

Typically, the transfer configuration is suitable for loading the consumable ingredient in the ingredient holder before processing this ingredient to prepare a beverage and/or for unloading any residual consumed ingredient from the ingredient holder after processing.

The ingredient holder can be arranged to receive, house and evacuate a capsule in which this ingredient is contained.

For instance, the machine is a coffee, tea, chocolate or soup preparation machine, such as a self-contained table-top machine that can be electrically connected to the mains, e.g. at home or in an office. In particular, the machine is arranged for preparing within the ingredient holder a beverage by passing hot or cold water or another liquid through a capsule containing an ingredient of the beverage to be prepared, such as ground coffee or tea or chocolate or cacao or milk powder.

For example, the preparation machine comprises: an ingredient processing arrangement including one or more of a liquid reservoir, a liquid circulation circuit, a heater, a pump and the ingredient holder arranged to receive ingredient capsules for extraction and evacuate capsules upon extraction; a housing having an opening leading into a seat to which capsules are evacuated from the preparation unit; and a receptacle having a cavity forming a storage space for collecting capsules evacuated to the seat into the receptacle up to a level of fill. The receptacle is insertable into the seat for collecting capsules and is removable from the seat for emptying the collected capsules. Examples of such ingredient processing arrangements are disclosed in WO 2009/074550, WO 2009/130099 and PCT/EP09/053139.

The beverage preparation module may include one or more of the following components:
a) the ingredient holder, such as a brewing unit, for receiving an ingredient of this beverage, in particular a pre-portioned ingredient supplied within a capsule, and for guiding an incoming flow of liquid, such as water, through this ingredient to a beverage outlet;
b) an in-line heater, such as a thermoblock, for heating this flow of liquid to be supplied to the ingredient holder;
c) a pump for pumping this liquid through the in-line heater;
d) one or more fluid connecting members for guiding this liquid from a source of liquid, such as a tank of liquid, to the beverage outlet;
e) an electric control unit, in particular comprising a printed circuit board (PCB), for receiving instructions from a user via an interface and for controlling the in-line heater and the pump; and
f) one or more electric sensors for sensing at least one operational characteristic selected from characteristics of the ingredient holder, the in-line heater, the pump, a liquid reservoir, an ingredient collector, a flow of this liquid, a pressure of this liquid and a temperature of this liqu i d , and for communicating such characteristic(s) to the control unit.

The heater may be a thermoblock or an on demand heater (ODH), for instance an ODH type disclosed in EP 1 253 844, EP 1,380 243 and EP 1 809 151.

In accordance with the invention, a mechanical locking device is provided to:
- mechanically detect a position of the service unit and mechanically prevent the ingredient holder from taking its processing configuration when the service unit is off its operative position, in particular when the service unit is removed from the seat; and/or
- mechanically detect a configuration of the ingredient holder and mechanically prevent removal of the service unit from the seat when the ingredient holder is in its processing configuration, in particular when the ingredient holder is off its transfer configuration.

Hence, instead of the prior art electronic sensing, electronic locking and control arrangements, a simple all-mechanical locking device can be provided to prevent: initiation of a beverage preparation when the machine is not in a configuration to do so because a service unit is not properly positioned in the machine, e.g. when the waste material collector or ingredient supply such as a water tank is not in its operative position; and/or to prevent early removal of such a service unit, e.g. while the machine is still in the process or in a configuration to prepare a beverage.

Before the service unit is withdrawn from the seat, the user may be invited to make sure that the ingredient holder is emptied before emptying the service unit, in particular that no capsule remains in the ingredient holder and that the last used capsule has been properly evacuated to the service unit. To avoid clogging of the service unit, in particular with used ingredient capsules, the service unit may incorporate an anti-clogging system, for example as disclosed in WO 2009/074559 and in WO 2009/135869, the contents of which are hereby incorporated by way of reference.

The locking device may be of the type known in the field of cabinets with several drawers so configured that the ability to move one drawer depends on the position of other drawers. This kind of technology is well known in the field of office and home furniture for storing documents, clothes and other items, for example as disclosed in US 4,960,309, US 5,056,876, etc.... This type of locking device can be adapted and transferred to the field of beverage preparation machines. In the context of the present invention, the prior art openable and closable drawers are notionally substituted by the ingredient holder that can be brought from a processing to a transfer configuration and vice versa, and the insertable and removable service unit. Of course, other configurations of the same type can provide this locking functionality.

The ingredient holder typically has a first part and a second part delimiting an ingredient chamber for receiving the ingredient, the first part being movable to the second part into the processing configuration and away from the second part into the transfer configuration. Examples of suitable ingredient holders are disclosed in EP 1 095 605, EP 1 646 305, EP 1 757 212, EP 1 859 713, EP 1 859 714, EP 2 103 236, EP 2 119 385, WO 2009/043630 and WO 2009/130099.

For instance, the mechanical locking device comprises a first linkage member linked to the movable first part, the first linkage member being arranged to:
- block the movable first part from reaching the processing configuration when the service unit is detected off its operative position by the locking device; and/or
- detect when the movable first part is in its processing configuration so as to block the service unit in its operative position by the locking device.

Normally, the movable first part has a cooperating first linkage arrangement that is connected to the first linkage member of the locking device. The cooperating first linkage arrangement may be in the form of a member assembled to the movable first and/or integrally formed therewith. For example, the first linkage member is linked to the movable first part by a cam and cam-follower arrangement

The mechanical locking device may comprise a second linkage member linked or linkable to the service unit, the second linkage member can be arranged to:
- block the service unit in its operative position when the movable first part is in its processing configuration; and/or
- detect when the service unit is off its operative position so as to block the movable first part from reaching the processing configuration by the locking device.

Typically, when the service unit is situated in the machine's seat, the second linkage member is linked to the service unit, the linkage member being unlinked from the service unit when removed from the seat but linkable thereto by reinsertion of the service unit into the seat.

Normally, the service unit has a cooperating second linkage arrangement that is connected (or connectable) to the second linkage member of the locking device. The cooperating second linkage arrangement may be in the form of a member assembled to the service unit and/or integrally formed therewith. For example, the second linkage member is linked to the removable service unit by a cam and cam-follower arrangement.

In one embodiment, the mechanical locking device comprises mechanically interconnected first and second linkage members, the first linkage member being mechanically linked to the ingredient holder, in particular by a cam and cam-follower first arrangement, the second linkage member being mechanically linkable to the service unit, in particular by a cam and cam-follower second arrangement. The first linkage member may be so mechanically linked to the ingredient holder that changing the ingredient holder from its processing configuration to its transfer configuration and vice versa causes motion of the first and second linkage members. The second linkage member can be so mechanically linked or linkable to the service unit that moving the service unit to and from its operative position in the seat causes motion of the second and first linkage members. The first and second linkage members are generally rigidly interconnected, possibly allowing small deflections between the linkage members in particular resilient deflections. Optionally, the mechanical locking device is formed of a single component with which the first and second linkage members are integral.

The mechanical locking device can be pivotally and/or translationally mounted in the seat, in particular by a cam cam-follower arrangement between the locking device and a wall, such as a sidewall, of the seat.

The service unit may be arranged to lock the locking device in a position for locking the ingredient holder in its transfer configuration when the service unit is removed from the seat and until reinsertion into the seat. For instance, the machine comprises a retainer, in particular fixed to the seat, for holding the locking device in the position locking the ingredient holder in its transfer configuration. Optionally, the service unit has a guide member for driving the locking device to the retainer when the service unit is withdrawn from the seat and/or for driving the locking device away from the retainer by reinsertion of the service unit into the machine's seat.

Usually, the service unit is manually movable into the operative position and manually removable from the seat. Likewise, the ingredient holder can be arranged to be manually brought from its processing configuration to its transfer configuration and vice versa. For example, the ingredient holder is associated with a user-handle for bring the holder from its processing configuration to its transfer configuration and vice versa.

The service unit and/or the ingredient holder may be automatically driven, in particular by using one or more motors.

The service unit can be arranged to: collect waste liquid and/or solid ingredient; and/or supply consumable liquid and/or solid ingredient.

For instance, the service unit includes an arrangement for collecting at least one of:
- waste beverage liquid ingredient, such as water, e.g. from a machine internal liquid evacuation arrangement as disclosed in EP 1 900 312 or EP 1 913 851;
- waste beverage solid ingredient, such as a used beverage flavouring ingredient in particular ground coffee, optionally contained in a pre-portioned capsule, for example a used coffee capsule; and
- waste beverage, such as drips from a beverage dispensing outlet or draining from the ingredient holder when brought into its transfer configuration after processing the ingredient.

Examples of service units providing such collecting features are disclosed in EP 1 095 605, EP 1 731 065, EP 1 867 260, WO 2009/135869 and WO 2009/074559, the contents of which are hereby incorporated by way of reference.

The service unit may be arranged to supply to the ingredient holder consumable liquid and/or solid ingredient such as water, milk, tea leafs, ground or instant coffee, concentrate or dry soup, syrup and powder chocolate. For instance, the service unit comprises a water or milk supply reservoir or an ingredient supply system, e.g. as in EP 1 447 034 and EP 1 943 931.

### Brief Description of the Drawings

The invention will now be described with reference to the schematic drawings, wherein:
- Figure 1 is an overall view of a beverage preparation machine according to the invention;
- Figure 2 is an overall view of a similar beverage preparation machine according to the invention;
- Figures 3a to 3c schematically illustrate side views of different positions of a service unit and an ingredient chamber with a locking device of a beverage preparation machine according to the invention; and
- Figures 4a to 4c schematically illustrate front views of a locking device of the beverage preparation machine shown in Figs 3a to 3c in the corresponding configurations.

### Detailed description

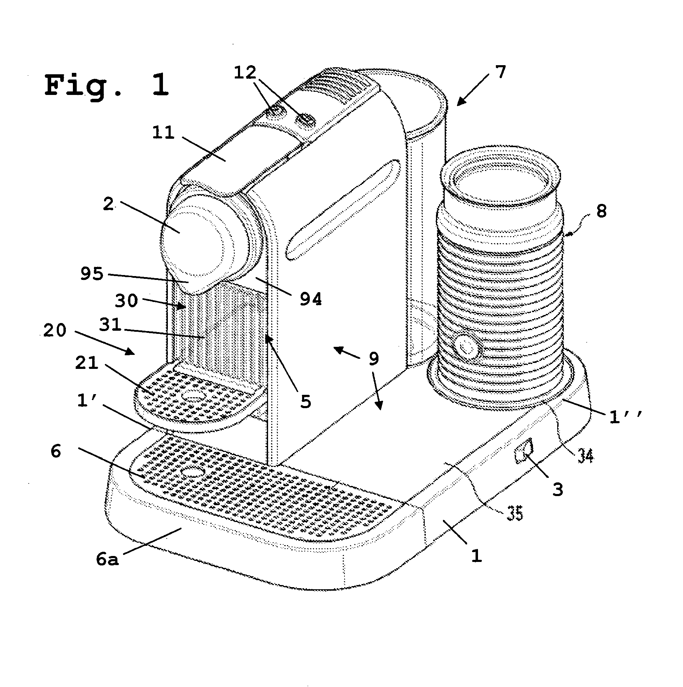

Figure 1 shows a beverage preparation machine according to the invention. The machine has a beverage preparation unit 2 in a housing 9. Unit 2 is arranged for receiving an ingredient capsule in an extraction chamber and for feeding a liquid such as water to the capsule. Unit 2 is mounted on a platform 1 and extends along a lateral side 1' thereof. A beverage outlet 95 for dispensing beverage from unit 2 extends through a front face 94 of housing 9.

Unit 2 includes a brewing module that comprises an opening and closure handle 11 and a ingredient holder (not shown) for holding the substance-containing capsule, e.g., a coffee capsule, and a beverage delivery means such as a beverage duct 95. The ingredient holder typically comprises a capsule holder and a brewing cage delimiting the extraction chamber, a fluid injection system for injecting water in the capsule and a closure device such as a lever and a knee joint mechanism. Suitable extraction modules are for example described in EP 1 859 713. Further possible features of unit 2 are discussed in greater details in co-pending application EP 2 070 454, the content of which is hereby incorporated by way of reference.

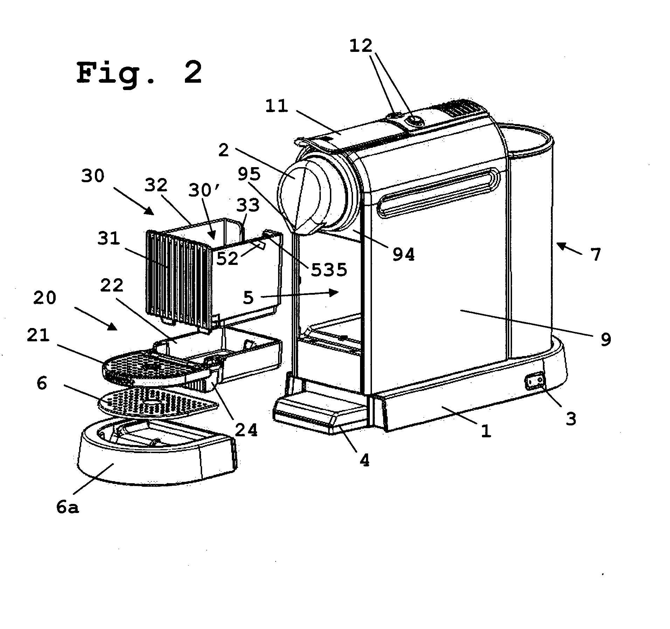

Furthermore, housing 9 houses within a seat 5 a service unit 20,30 for collecting waste materials such as waste liquid and/or a waste beverage ingredient. Service unit 20,30 is manually insertable into seat 5 to reach a collection position for collecting waste materials (as shown in Fig. 1); and removable from seat 5 for emptying the waste materials upon collection thereof (as shown in Fig. 2). Service unit 20,30 may slide into and out from seat 5.

This service unit includes a used capsule receptacle 30 that has a front face 31 and that is removably inserted under the brewing unit and outlet 95. Further details of service unit 20,30 and its seat in housing 9 will be discussed in relation with Figs 2 to 4c.

Platform 1 bears beverage unit 2, a water tank 7 attached to the base platform externally to housing 9 and adjacent to the rear wall of housing 9, a fluid connection therebetween, and an electric power connection to the mains.

A master switch 3 is mounted on platform 1 for shutting on and off the machine. Two user-buttons 12, typically for selecting a small or large quantity of beverage to be prepared, are located above unit 2.

Upper face 34 of platform 1 has means in the form of a STRIX™ connector (not shown) for connecting a milk frothing device 8. Such disconnectable connectors for such a platform 1 and frothing device 8 are for example disclosed in greater detail in WO 03/075629, WO 2008/046837 and in WO 2008/142154, the contents of which are hereby incorporated by way of reference.

Upper face 34 is adjacent neighbouring front face 35 that can be associated with a heating system, in particular integrated in platform 1, and that may be arranged to support one or more cups or mugs for preheating thereof prior to use.

As mentioned above, beverage unit 2 generally extends upwards within housing 9 adjacent a first lateral edge 1' of platform 1. Frothing device 8 is generally located adjacent a second lateral edge of platform 1 opposite the first edge 1" , so that housing 9 and platform 1 generally form in cross-section an L-shape that supports frothing device 8.

The beverage preparation machine also includes a support device 6 for supporting mugs that is located under beverage outlet 95 and that is in the shape of a perforated plate for evacuating liquid. A collector 6a in the form of a shallow reservoir is located underneath support device 6 for collecting the evacuated liquid. Collector 6a does not require a high capacity for collecting liquid. Most of the time, collector 6a will only have to collect drips and spills.

Support device 6 and collector 6a are separable en bloc from platform 1, for instance for emptying collector 6a and/or for cleaning.

Furthermore, service unit 20,30 has a cup support device 20 that includes, above support device 6, a second support plate 21 for supporting recipients, such as cups, of smaller size underneath outlet 95. Like main support device 6, second support plate 21 comprises a perforated plate for the evacuation of liquid, in particular to collector 6a, optionally via support device 6. Second support plate 21 is movable into a generally horizontal operative position between the outlet 95 and support device 6, as illustrated, and is movable into a generally upright or vertical rest position away therefrom so that a larger recipient is placeable on support device 6 under outlet 95. Second support plate 21 is in particular rotatable and/or slidable from its operative position into its rest position. Further details of possible features of such second support device are for example disclosed in EP 1 867 260.

Figure 2, in which the same numeric references generally designate the same elements, generally shows another beverage preparation machine according to the invention.

The preparation machine shown in Fig. 2 has the same features as the machine of Fig. 1 except for the absence of the lateral platform extension supporting a milk frothing device.

This machine has a seat 5 for receiving service unit 20,30 that includes cup support device 20 which bears receptacle 30 having a cavity 30' that forms a storage space for collecting used capsules underneath the brewing unit with the extraction chamber.

Receptacle 30 may be assembled to cup support device 20 which includes cup support member 21 that is pivotally mounted onto a reservoir 22 supporting receptacle 30. Support member 21 is assembled to or integral with a stop member 24 that is rotatable with support member against a front face of reservoir 22 to stop the downward rotation of support member 21 and secure member 21 in a horizontal position.

Receptacle 30 may have a bottom part with a drain-hole so that reservoir 22 can collect liquid drained from this bottom part into reservoir 22 via the drain-hole. Cup support device 20 and receptacle 30 resting thereon may be inserted and removed en bloc from seat 5.

Furthermore, receptacle 30 has an opening 33 in the rear upright wall that is used to prevent clogging by an accumulation of used capsules, as described in greater details WO 2009/074559, which is hereby incorporated by way of reference.

Also shown in Fig. 2, collector 6a supporting support device 6 may be removably assembled via a mechanical connector 4 to platform 1.

Service unit 20,30 comprises an arrangement for collecting: waste beverage precursor-liquid, such as water, in reservoir 22; waste beverage precursor-solid, such as a used beverage flavouring ingredient in particular ground coffee, optionally contained in a pre-portioned capsule, in used ingredient receptacle 30; and waste beverage, such as drips from a beverage dispensing outlet in reservoir 22 via a liquid evacuation groove arrangement in cup support 21.

The beverage preparation machines shown in Figs 1 and 2 have a mechanical locking arrangement 50 including a locking device 53 held in seat 5 and associated with cooperating portions 51,52,534,535 of ingredient holder 13, of service unit 20,30 and of seat 5.

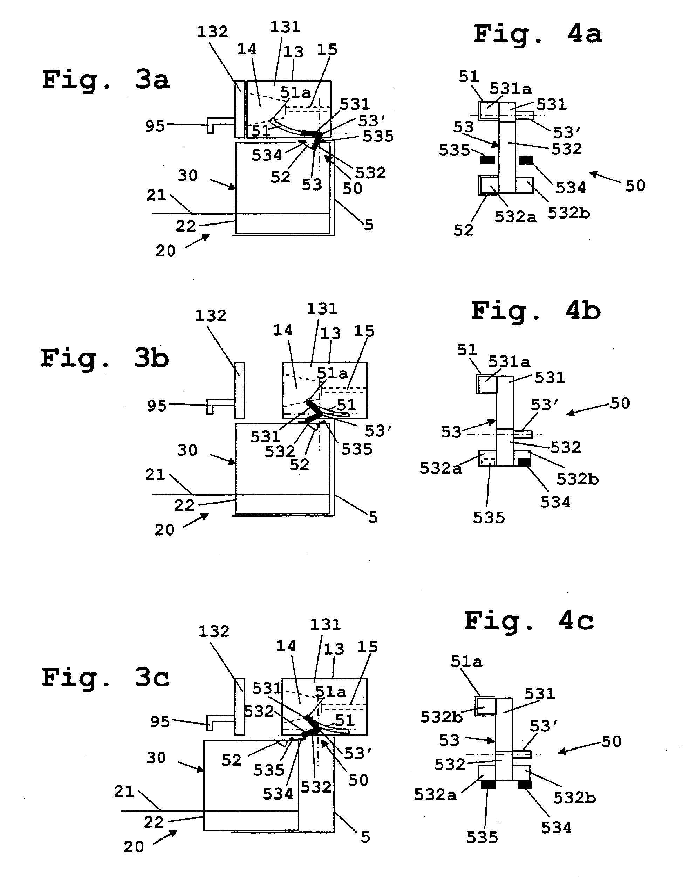

Figs 3a to 4c illustrate in greater detail this aspect of the invention. In particular, Figs 4a to 4c show a front view of a mechanical locking device 53 in each position of the locking device illustrated in Figs 3a to 3c, respectively, in combination with a service unit 20,30 and an ingredient holder in the form of a brewing unit 13 having an extraction chamber 14.

The beverage preparation machine has a brewing unit 13 with a fixed front part 132 and a movable rear part 131 delimiting an ingredient chamber 14 for accommodating ingredient capsules. Chamber 14 is in fluid connection with a liquid injection line 15 and a beverage outlet 95. Brewing unit 13 has a transfer configuration in which ingredient chamber 14 is open, as illustrated in Figs 3b and a processing configuration in which chamber 14 is closed, as shown in Fig. 3a. Chamber 14 is opened and closed by moving apart and together front part 132 and rear part 131 of brewing unit 13. Specifically, rear part 131 forms a movable first part and front part 132 forms a fixed second part of brewing unit 13. A handle 11, as illustrated in Figs 1 and 2, can be provided to open and close manually brewing unit 13.

Such a brewing unit opening and closing mechanism together with the insertion, extraction and removal of ingredient capsules is described in greater details for example in EP 1 646 305, EP 1 757 212, EP 1 859 713, EP 1 859 714, EP 2 103 236, EP 2 119 385, WO 2009/043630 and WO 2009/130099, the contents of which are incorporated by way of reference.

Furthermore, the illustrated beverage preparation machine comprises a mechanical locking arrangement 50 with locking device 53 for mechanically preventing preparation of any beverage when service unit 20,30 is not in the collection position. In particular, mechanical locking device 53 may be configured to prevent: closure of ingredient chamber 14 when service unit 20,30 is not in the collection position, as illustrated in Fig. 3c; and/or prevent removal of service unit 20,30 when ingredient chamber 14 is not in its open configuration, as illustrated in Fig. 3a.

When brewing unit 13 is opened and closed manually with a handle, locking device 53 in locking arrangement 50 will block or release the brewing unit and the handle depending on the position of service unit 20,30.

Mechanical locking arrangement 50 comprises a first cam 51, e.g. a groove, associated with movable rear part 131 of brewing unit 13, a second cam 52, e.g. a groove, associated with service unit 20,30 and a locking device 53 having cam-followers 531a,532a associated with cams 51,52. Cam-follower 531a forms a first linkage member linked to movable first part 131 of brewing unit 13 via a cooperating (integral) linkage member including cam 51 in movable first part 131. Cam-follower 532a forms a second linkage member linked or linkable to service unit 20,30 via a cooperating (integral) linkage member including cam 52 in service unit 20,30.

Hence, locking device 53 has a pair or connected arms 531,532 pivotable about an axis 53' in seat 5. Arms 531,532 bear linkage members 531a,532a, e.g. generally in the form of pins, engaging as cam-followers with cams 51,52, e.g. in the form of grooves cooperating with such pins. Pivoting axis 53' is inserted into a generally oblong holding opening (not shown) in seat 5 of the beverage preparation machine, to permit the pivoting of element 53 about axis 53' and small translations of axis 53' in seat 5, in particular generally horizontal translations.

First linkage member 531a is so mechanically linked to ingredient holder 13 that bringing ingredient holder 13 from its processing configuration (Figs 3a and 4a) to its transfer configuration (Figs 3b and 4b) and vice versa causes motion of first and second linkage members 531a,532a. Second linkage member 532a is so mechanically linked or linkable to service unit (20,30) that moving service unit (20,30) to and from its operative position (Fig. 3a) in seat 5 causes motion of the second and first linkage members.

Figs 3a and 4a illustrate locking arrangement 50 when extraction chamber 14 is in the closed state, i.e. front and rear parts 131,132 of brewing unit 13 are urged together and in the processing configuration. In this configuration, the beverage preparation machine is ready to prepare a beverage, providing a capsule is present in extraction chamber 14. In such a configuration, service unit 20,30 should not be removed from seat 5. To prevent such a removal, locking device 53 has its arm 532 with member 532a fully engaged with cam 52 associated with service unit 20,30. If a user pulls on service unit 20,30, locking device 53 that has its other arm 531 with member 531a engaged in cam 51 and its pivoting axis 53' engaged in the corresponding opening in seat 5, will prevent removal or service unit 20,30 since locking device 53 will be prevented from pivoting.

Hence, in accordance with the invention, locking device 53 mechanically detects a configuration of the brewing unit 13 and mechanically prevents removal of service unit 20,30 from seat 5 when brewing unit 13 is in its processing configuration, in particular when brewing unit 13 is off its transfer configuration.

Figs 3b and 4b illustrate extraction chamber 14 in its transfer configuration, i.e. front and rear parts 131,132 of brewing unit 13 are spaced apart. In this configuration, the beverage preparation machine is not in a state of readiness for preparing a beverage. In such a configuration, it is possible to insert a capsule into brewing chamber 14 or remove a capsule therefrom. Moreover, in this inoperative configuration, service unit 20,30 can be removed from seat 5. Figs 3b and 4b thus illustrate a transitional configuration.

Locking device 53 has its arm 531 with member 531a driven upwards cam 51 associated with brewing unit 13. Moreover, arm 532 with member 532a are disengaged from cam 52 associated with service unit 20,30. If a user pulls on service unit 20,30, locking device 53 does not block anymore removal of unit 20,30 from seat 5. In this case, locking arrangement 50 is moved to the configuration shown in Figs 3c and 4c.

Conversely, if instead of pulling service unit 20,30 out of seat 5, rear part 131 of brewing unit 13 is moved to front part 132, locking device 53 is pivoted about axis 53' with its arm 532 and member 532a re-engaging with cam 52 of service unit 20,30 towards the configuration illustrated in Figs 3a and 4a.

Figs 3c and 4c illustrate the removal of service unit 20,30 while extraction chamber 14 is blocked in its opened configuration, i.e. front and rear parts 131,132 of brewing unit 13 are spaced apart in the transfer configuration and prevented from being brought together. In this configuration, the beverage preparation machine is not in a state of readiness for preparing a beverage but in a state of servicing, e.g. emptying collected water and solid ingredient material such as ground coffee from service unit 20,30.

In this configuration, locking device 53 has been brought in a blocking position to prevent closure of brewing chamber 14. Arm 531 with member 531a are driven upwards cam 51 to a locking end 51a thereof. Locking end 51a extends generally upwardly in cam 51 and exhibits a change of direction. Moreover, Arm 532 has a securing member 532b opposite member 532a. Securing member 532b is secured on and against a retainer 534 of seat 5. To drive securing member 532b onto retainer 534, service unit 20,30 has a guide member 535, e.g. protrusion, which guides locking device 53 via arm 532 at the passage of drive member 535 when service unit 20,30 is pulled out from seat 5. By driving arm 532 onto support surface 534, pivoting axis 53' is slightly displaced towards the front with drive member 535. In this configuration, locking device is locked between support surface 534, locking end 51a and the oblong opening in seat 5 for receiving axis 53'. In particular, locking device 53 is prevented from pivoting counter-clockwise which blocks open rear part 131 of brewing unit 13, thus preventing beverage preparation upon removal of service unit 20,30 from its normal operative position in seat 5.

Hence, in accordance with the invention, locking device 53 is arranged to mechanically detect a position of service unit 20,30 and mechanically prevent ingredient holder 13 from taking its processing configuration when service unit 20,30 is off its operative position, in particular when the service unit is removed from seat 5.

Generally speaking, the machine may be configured to deactivate one or more components necessary for the processing of the ingredient when ingredient holder 13 is not in its processing configuration. In such a situation, the machine may deactivate a pump for pumping liquid such as water through the ingredient.

When service unit 20,30 is inserted back into its operative position, guide member 535 of service unit 20,30, comes into contact with member 532a of locking device 53 and pushes member 532b off retainer 534 into the configuration shown in Figs 3b and 4b. In order to permit such a disengagement, the upper end of guide member 535 is slightly higher than the bottom end of member 532a when member 532b is resting on support surface 534. Hence, guide member 535 is used to secure and un-secure locking device 53 in both directions when passing under locking device 53.

In its secured position, as shown in Figs 3c and 4c, locking device 53 may be placed loose between locking end 51a, retainer 534 and the oblong opening in seat 5 for holding axis 53', or locking device 53 may be urged therebetween so as to properly secure member 53 in this position in case the beverage preparation machine is moved while service unit 20,30 is removed. When the locking device 53 is configured to be urged in this position, at least one or both arms 531,532 may be made slightly resilient.

First and second linkage members 531a,532a are generally rigidly interconnected via arms 531,532. Locking device 53 including securing member 532b and axis 53' can be formed of a single component with which first and second linkage members 531a,532a are integral. For example, locking device is formed unitarily by moulding or machining.

In a variation, it is of course possible to provide this type of configuration with a brewing unit in which the front part is moved to and away from the rear part in order to open and close the brewing chamber, for instance as taught in WO 2009/043630. In this case, the locking device follows a cam associated with the movable front part of the brewing unit.

## Claims

1. A beverage preparation machine comprising:
- a seat (5);
- an ingredient holder (13) that has a processing configuration for processing an ingredient contained in the holder and a transfer configuration for inserting said ingredient into the holder and/or for evacuating said ingredient from the holder; and
- a service unit (20,30) having an operative position in the seat for collecting consumed ingredient from the ingredient holder and/or for supplying consumable ingredient to the ingredient holder, the service unit being removable from the seat for emptying the consumed ingredient and/or refilling with consumable ingredient,
**characterised in that** a mechanical locking device (53) is provided to:
- mechanically detect a position of the service unit and mechanically prevent the ingredient holder from taking its processing configuration when the service unit is off its operative position, in particular when the service unit is removed from the seat; and/or
- mechanically detect a configuration of the ingredient holder and mechanically prevent removal of the service unit from the seat when the ingredient holder is in its processing configuration, in particular when the ingredient holder is off its transfer configuration.

2. The machine of claim 1, wherein the ingredient holder (13) has a first part (131) and a second part (132) delimiting an ingredient chamber (14) for receiving said ingredient, the first part being movable to the second part into the processing configuration and away from the second part into the transfer configuration.

3. The machine of claim 2, wherein the mechanical locking device (53) comprises a first linkage member (531a) linked to the movable first part (131), the first linkage member being'optionally linked to the movable first part by a cam and cam-follower arrangement (51,531a), the first linkage member being arranged to:
- block the movable first part from reaching the processing configuration when the service unit (20,30) is detected off its operative position by the locking device; and/or
- detect when the movable first part is in its processing configuration so as to block the service unit in its operative position by the locking device.

4. The machine of any preceding claim, wherein the mechanical locking device (53) comprises a second linkage member (532a) linked or linkable to the service unit (20,30), the second linkage member being optionally linked to the removable service unit (20,30) by a cam and cam-follower arrangement (52,532a), the second linkage member being arranged to:
- block the service unit in its operative position when the movable first part (131) is in its processing configuration; and/or
- detect when the service unit is off its operative position so as to block the movable first part from reaching the processing configuration by the locking device.

5. The machine of any preceding claim, wherein the mechanical locking device (53) comprises mechanically interconnected first and second linkage members (531a,532a), the first linkage member being mechanically linked to the ingredient holder (13), in particular by a cam and cam-follower first arrangement (51, 531a), the second linkage member being mechanically linkable to the service unit (20,30), in particular by a cam and cam-follower second arrangement (52,532a).

6. The machine of claim 5, wherein the first linkage member (531a) is so mechanically linked to the ingredient holder (13) that changing the ingredient holder from its processing configuration to its transfer configuration and vice versa causes motion of the first and second linkage members (531a, 532a) .

7. The machine of claim 5 or 6, wherein the second linkage member (532a) is so mechanically linked or linkable to the service unit (20,30) that moving the service unit to and from its operative position in the seat (5) causes motion of the second and first linkage members (532a,531a).

8. The machine of any one of claims 5 to 7, wherein the first and second linkage members (531a,532a) are generally rigidly interconnected, the mechanical locking device (53) being optionally formed of a single component with which the first and second linkage members are integral.

9. The machine of any preceding claim, wherein the mechanical locking device (53) is pivotally and/or translationally mounted in the seat (5), in particular by a cam cam-follower arrangement (53') between the locking device and a wall of the seat, such as a sidewall thereof.

10. The machine of any preceding claim, wherein the service unit (20,30) is arranged to lock the locking device (53) in a position for locking the ingredient holder (13) in its transfer configuration when the service unit is removed from the seat (5) and until reinsertion into the seat.

11. The machine of claim 10, which comprises a retainer (534), in particular fixed to the seat (5), for holding the locking device (53) in the position locking the ingredient holder (12) in its transfer configuration, optionally the service unit (20,30) having a guide member (535) for driving the locking device to the retainer when the service unit is withdrawn from the seat and/or for driving the locking device away from the retainer by reinsertion of the service unit into the seat.

12. The machine of any preceding claim, wherein the service unit (20,30) is manually movable into the operative position and removable from the seat (5) and/or wherein the ingredient holder (13) is arranged to be manually brought from its processing configuration to its transfer configuration and vice versa, in particular via a user handle (11).

13. The machine of any preceding claim, wherein the service unit (20,30) is arranged to: collect waste liquid and/or solid ingredient; and/or supply consumable liquid and/or solid ingredient.

14. The machine of claim 13, wherein the service unit (20,30) is arranged to:
- supply to the ingredient holder consumable liquid and/or solid ingredient such as water, milk, tea leafs, ground or instant coffee, concentrate or dry soup, syrup and powder chocolate; and/or
- collect from the ingredient holder waste liquid and/or ingredient such as water, beverage excesses and/or consumed ingredient.

15. The machine of any preceding claim, wherein the ingredient holder (13) is arranged to receive, house and evacuate a capsule in which said ingredient is contained.

## Patentansprüche

1. Getränkezubereitungsmaschine mit:
- einer Aufnahme (5);
- einem Zutatenhalter (13), der eine Verarbeitungskonfiguration zum Verarbeiten einer in dem Halter enthaltenen Zutat und eine Übergabekonfiguration zum Einführen der Zutat in den Halter und/oder zum Entleeren der Zutat aus dem Halter aufweist; sowie
- einer Serviceeinheit (20, 30) mit einer Betriebsstellung in der Aufnahme zum Auffangen der verbrauchten Zutat aus dem Zutatenhalter und/oder zum Zuführen von verzehrbarer Zutat in den Zutatenhalter, wobei die Serviceeinheit aus der Aufnahme entfernbar ist, um die verbrauchte Zutat zu abzuführen und/oder eine verzehrbare Zutat nachzufüllen,
**dadurch gekennzeichnet, dass** eine mechanische Verriegelungsvorrichtung (53) vorgesehen ist, um:
- mechanisch eine Stellung der Serviceeinheit zu erfassen und mechanisch zu verhindern, dass der Zutatenhalter seine Verarbeitungskonfiguration annimmt, wenn sich die Serviceeinheit außerhalb ihrer Betriebsstellung befindet, insbesondere wenn die Serviceeinheit aus der Aufnahme entfernt ist; und/oder
- mechanisch eine Konfiguration des Zutatenhalters zu erfassen und mechanisch die Entfernung der Serviceeinheit aus der Aufnahme zu verhindern, wenn sich der Zutatenhalter in seiner Verarbeitungskonfiguration befindet, insbesondere wenn sich der Zutatenhalter außerhalb seiner Übergabekonfiguration befindet.

2. Maschine gemäß Anspruch 1, wobei der Zutatenhalter (13) einen ersten Teil (131) und einen zweiten Teil (132) aufweist, der eine Zutatenkammer (14) zur Aufnahme der Zutat begrenzt, wobei der erste Teil zu dem zweiten Teil hin in die Verarbeitungskonfiguration und von dem zweiten Teil weg in die Übergabekonfiguration beweglich ist.

3. Maschine gemäß Anspruch 2, wobei die mechanische Verriegelungsvorrichtung (53) ein erstes Verbindungselement (531a) umfasst, das mit dem beweglichen ersten Teil (131) verbunden ist, wobei das erste Verbindungselement wahlweise mit dem beweglichen ersten Teil über eine Nocken- und Stößelanordnung (51, 531a) verbunden ist, wobei das erste Verbindungselement derart angeordnet ist, dass es:
- durch die Verriegelungsvorrichtung verhindert, das der bewegliche erste Teil die Verarbeitungskonfiguration erreicht, wenn die Serviceeinheit (20, 30) außerhalb ihrer Betriebsstellung erfasst wird; und/oder
- erfasst, wenn sich der bewegliche erste Teil in seiner Verarbeitungskonfiguration befindet, um die Serviceeinheit durch die Verriegelungsvorrichtung in ihrer Betriebsposition zu sperren.

4. Maschine gemäß einem vorhergehenden Anspruch, wobei die mechanische Verriegelungsvorrichtung (53) ein zweites Verbindungselement (532a) umfasst, das mit der Serviceeinheit (20, 30) verbunden oder verbindbar ist, wobei das zweite Verbindungselement wahlweise durch eine Nocken- und Stößelanordnung (52, 532a) mit der entfernbaren Serviceeinheit (20, 30) verbunden wird, wobei das zweite Verbindungselement so angeordnet ist, dass es:
- die Serviceeinheit in ihrer Betriebsstellung sperrt, wenn sich der bewegliche erste Teil (131) in seiner Verarbeitungskonfiguration befindet; und/oder
- erfasst, wenn sich die Serviceeinheit außerhalb ihrer Betriebsstellung befindet, um durch die Verriegelungsvorrichtung zu verhindern, dass der bewegliche erste Teil die Verarbeitungskonfiguration erreicht.

5. Maschine gemäß einem vorhergehenden Anspruch, wobei die mechanische Verriegelungsvorrichtung (53) mechanisch miteinander verbundene erste und zweite Verbindungselemente (531a, 532a) umfasst, wobei das erste Verbindungselement mit dem Zutatenhalter (13), insbesondere über eine erste Nocken- und Stößelanordnung (51, 531a), mechanisch verbunden ist, wobei das zweite Verbindungselement mit der Serviceeinheit (20, 30), insbesondere über eine Nocken- und Stößelanordnung (52, 532a), mechanisch verbindbar ist.

6. Maschine gemäß Anspruch 5, wobei das erste Verbindungselement (531a) derart mechanisch mit dem Zutatenhalter (13) verbunden ist, dass der Wechsel des Zutatenhalters von seiner Verarbeitungskonfiguration in seine Übergabekonfiguration und umgekehrt eine Bewegung des ersten und zweiten Verbindungselementes (531a, 532a) bewirkt.

7. Maschine gemäß Anspruch 5 oder 6, wobei das zweite Verbindungselement (532a) derart mit der Serviceeinheit (20, 30) mechanisch verbunden oder verbindbar ist, dass das Bewegen der Serviceeinheit in ihre und aus ihrer Betriebsstellung in der Aufnahme (5) eine Bewegung des zweiten und ersten Verbindungselementes (532a, 531a) bewirkt.

8. Maschine gemäß einem der Ansprüche 5 bis 7, wobei das erste und zweite Verbindungselement (531a, 532a) im Allgemeinen starr miteinander verbunden sind, wobei die mechanische Verriegelungsvorrichtung (53) wahlweise aus einem einzelnen Bauteil gebildet ist, mit dem das erste und zweite Verbindungselement einstückig ausgebildet sind.

9. Maschine gemäß einem vorhergehenden Anspruch, wobei die mechanische Verriegelungsvorrichtung (53) schwenkbar und/oder translatorisch in der Aufnahme (5) angebracht ist, insbesondere durch eine Nocken-Stößelanordnung (53') zwischen der Verriegelungsvorrichtung und einer Wand der Aufnahme, wie z.B. einer Seitenwand von dieser.

10. Maschine gemäß einem vorhergehenden Anspruch, wobei die Serviceeinheit (20, 30) so angeordnet ist, dass sie die Verriegelungsvorrichtung (53) in einer Stellung zum Verriegeln des Zutatenhalters (13) in seiner Übergabekonfiguration verriegelt, wenn die Serviceeinheit von der Aufnahme (5) entfernt wird und bis zu deren Wiedereinsetzen in die Aufnahme.

11. Maschine gemäß Anspruch 10, mit einer insbesondere an der Aufnahme (5) befestigten Halterung (534) zum Halten der Verriegelungsvorrichtung (53) in der Stellung, in der der Zutatenhalter (12) in seiner Übergabekonfiguration verriegelt ist, wobei die Serviceeinheit (20, 30) wahlweise ein Führungsteil (535) zum Bewegen der Verriegelungsvorrichtung zu der Halterung hin aufweist, wenn die Serviceeinheit aus der Aufnahme zurückgezogen wird, und/oder zum Bewegen der Verriegelungsvorrichtung weg von der Halterung, durch Wiedereinsetzen der Serviceeinheit in die Aufnahme.

12. Maschine gemäß einem vorhergehenden Anspruch, wobei die Serviceeinheit (20, 30) manuell in die Betriebsstellung bewegbar und aus der Aufnahme (5) entfernbar ist, und/oder wobei der Zutatenhalter (13) so angeordnet ist, dass er manuell aus seiner Verarbeitungskonfiguration in seine Übergabekonfiguration gebracht wird und umgekehrt, insbesondere über einen Benutzerhandgriff (11).

13. Maschine gemäß einem vorhergehenden Anspruch, wobei die Serviceeinheit (20, 30) so angeordnet ist, dass sie: eine flüssige und/oder feste Abfallzutat auffängt; und/oder verzehrbare flüssige und/oder feste Zutat zuführt.

14. Maschine gemäß Anspruch 13, wobei die Serviceeinheit (20, 30) so angeordnet ist, dass sie:
- dem Zutatenhalter verzehrbare flüssige und/oder feste Zutat wie z.B. Wasser, Milch, Teeblätter, gemahlenen oder Instantkaffee, Suppenkonzentrat oder Trockensuppe, Sirup und Schokoladenpulver zuführt; und/oder
- aus dem Zutatenhalter flüssige und/oder feste Abfallzutat wie z.B. Wasser, überschüssiges Getränk und/oder verbrauchte Zutat auffängt.

15. Maschine gemäß einem vorhergehenden Anspruch, wobei der Zutatenhalter (13) zum Aufnehmen, Unterbringen und Entleeren einer Kapsel vorgesehen ist, in der die Zutat enthalten ist.

## Revendications

1. Machine de préparation de boisson comprenant :
- un logement (5) ;
- un support d'ingrédient (13) qui présente une configuration de traitement pour traiter un ingrédient contenu dans le support et une configuration de transfert pour insérer ledit ingrédient dans le support et/ou pour évacuer ledit ingrédient dut support ; et
- une unité de service (20, 30) présentant une position de fonctionnement dans le logement pour recueillir un ingrédient consommé depuis le support d'ingrédient et/ou pour fournir un ingrédient consommable au support d'ingrédient, l'unité de service étant apte à être retirée du logement pour évacuer l'ingrédient consommé et/ou remplir avec un ingrédient consommable, **caractérisée en ce qu'**un dispositif de verrouillage mécanique (53) est prévu pour:
- détecter mécaniquement une position de l'unité de service et empêcher mécaniquement le support d'ingrédient de prendre sa configuration de traitement lorsque l'unité de service n'est pas dans sa position de fonctionnement, en particulier lorsque l'unité de service est retiré du logement ; et/ou
- détecter mécaniquement une configuration du support d'ingrédient et empêcher mécaniquement le retrait de l'unité de service du logement lorsque le support d'ingrédient est dans sa configuration de traitement, en particulier lorsque le support d'ingrédient n'est pas dans sa configuration de transfert.

2. Machine selon la revendication 1, dans laquelle le support d'ingrédient (13) présente une première partie (131) et une deuxième partie (132) délimitant une chambre d'ingrédient (14) pour recevoir ledit ingrédient, la première partie étant déplaçable vers la deuxième partie dans la configuration de traitement et étant déplaçable en s'éloignant de la deuxième partie dans la configuration de transfert.

3. Machine selon la revendication 2, dans laquelle le dispositif de verrouillage mécanique (53) comprend un premier organe de liaison (531a) reliée à la première partie mobile (131), le premier organe de liaison étant facultativement relié à la première partie mobile par un agencement de came et de galet de came (51, 531a), le premier organe de liaison étant agencé pour :
- empêcher la première partie mobile d'atteindre la configuration de traitement lorsque l'unité de service (20, 30) est détectée en dehors de sa position de fonctionnement par le dispositif de verrouillage ; et/ou
- détecter quand la première partie mobile est dans sa configuration de traitement de manière à bloquer l'unité de service dans sa position de fonctionnement par le dispositif de verrouillage.

4. Machine selon l'une quelconque des revendications précédentes, dans laquelle le dispositif de verrouillage mécanique (53) comprend un deuxième organe de liaison (532a) relié ou susceptible d'être relié à l'unité de service (20, 30), le deuxième organe de liaison étant facultativement relié à l'unité de service amovible (20, 30) par un agencement de came et de galet de came (52, 532a), le deuxième organe de liaison étant agencé pour:
- bloquer l'unité de service dans sa position de fonctionnement lorsque la première partie mobile (131) est dans sa configuration de traitement ; et/ou
- détecter quand l'unité de service est en dehors de sa position de fonctionnement de manière à empêcher la première partie mobile d'atteindre la configuration de traitement par le dispositif de verrouillage.

5. Machine selon l'une quelconque des revendications précédentes, dans laquelle le dispositif de verrouillage mécanique (53) comprend des premier et deuxième organes de liaison reliés entre eux mécaniquement (531a, 532a), le premier organe de liaison étant relié mécaniquement au support d'ingrédient (13), en particulier par un premier agencement de came et de galet de came (51, 531a), le deuxième organe de liaison étant susceptible d'être relié mécaniquement à l'unité de service (20, 30), en particulier par un deuxième agencement de came et de galet de came (52, 532a).

6. Machine selon la revendication 5, dans laquelle le premier organe de liaison (531a) est relié mécaniquement au support d'ingrédient (13) de telle sorte que le passage du support d'ingrédient de sa configuration de traitement à sa configuration de transfert et vice-versa provoque un mouvement des premier et deuxième organes de liaison (531a, 532a).

7. Machine selon la revendication 5 ou 6, dans laquelle le deuxième organe de liaison (532a) est relié ou susceptible d'être relié mécaniquement à l'unité de service (20, 30) de telle sorte que le déplacement de l'unité de service vers et à partir de sa position de fonctionnement dans le logement (5) provoque un mouvement des premier et deuxième organes de liaison (532a, 531a).

8. Machine selon l'une quelconque des revendications 5 à 7, dans laquelle les premier et deuxième organes de liaison (531a, 532a) sont généralement reliés solidement entre eux, le dispositif de verrouillage mécanique (53) étant facultativement formé par un unique composant avec lequel les premier et deuxième organes de liaison sont formés d'un seul tenant.

9. Machine selon l'une quelconque des revendications précédentes, dans laquelle le dispositif de verrouillage mécanique (53) est monté de manière pivotante et/ou translationnelle dans le logement (5), en particulier par un agencement de came et galet de came (53') entre le dispositif de verrouillage et une paroi du logement, comme par exemple une paroi latérale de celui-ci.

10. Machine selon l'une quelconque des revendications précédentes, dans laquelle l'unité de service (20,30) est agencée pour verrouiller le dispositif de verrouillage (53) dans une position pour verrouiller le support d'ingrédient (13) dans sa configuration de transfert lorsque l'unité de service est retirée du logement (5) et jusqu'à sa réinsertion dans le logement.

11. Machine selon la revendication 10, qui comprend un dispositif de retenue (534), en particulier fixé sur le logement (5), destiné à maintenir le dispositif de verrouillage (53) dans la position de verrouillage du support d'ingrédient (12) dans sa configuration de transfert, facultativement l'unité de service (20, 30) présentant un organe de guidage (535) pour entraîner le dispositif de verrouillage vers le dispositif de retenue lorsque l'unité de service est retiré du logement et/ou pour entraîner le dispositif de verrouillage en l'éloignant du dispositif de retenue en réinsérant l'unité de service dans le logement.

12. Machine selon l'une quelconque des revendications précédentes, dans laquelle l'unité de service (20, 30) est déplaçable manuellement dans la position de fonctionnement et est susceptible d'être retirée du logement (5) et/ou dans laquelle le support d'ingrédient (13) est agencé pour être amené manuellement de sa configuration de traitement à sa configuration de transfert et vice versa, en particulier par l'intermédiaire d'une poignée utilisateur (11).

13. Machine selon l'une quelconque des revendications précédentes, dans laquelle l'unité de service (20, 30) est agencée pour : recueillir des déchets d'ingrédient liquide et/ou solide ; et/ou fournir un ingrédient liquide et/ou solide consommable.

14. Machine selon la revendication 13, dans laquelle l'unité de service (20, 30) est agencée pour :
- fournir au support d'ingrédient un ingrédient liquide et/ou solide consommable comme de l'eau, du lait, des feuilles de thé, du café moulu ou instantané, un concentré ou une soupe déshydratée, du sirop et du chocolat en poudre ; et/ou
- recueillir depuis le support d'ingrédient des déchets liquides et/ou un ingrédient comme par exemple de l'eau, des excès de boisson et/ou un ingrédient consommé.

15. Machine selon l'une quelconque des revendications précédentes, dans laquelle le support d'ingrédient (13) est agencé pour recevoir, loger et évacuer une capsule dans laquelle est contenu ledit ingrédient.
